Europäisches Patentamt

European Patent Office

Office européen des brevets

(11) Publication number: **0 206 304**
**B1**

## EUROPEAN PATENT SPECIFICATION

(45) Date of publication of patent specification: **02.05.90**

(51) Int. Cl.⁵: **A 01 G 9/14, D 03 D 15/00**

(21) Application number: **86108540.5**

(22) Date of filing: **23.06.86**

(54) Covering sheet for agricultural use.

(30) Priority: **24.06.85 JP 138498/85**

(43) Date of publication of application:
**30.12.86 Bulletin 86/52**

(45) Publication of the grant of the patent:
**02.05.90 Bulletin 90/18**

(84) Designated Contracting States:
**DE FR NL**

(56) References cited:
**EP-A-0 089 422
FR-A-2 071 064
FR-A-2 325 315
GB-A-2 025 194
US-A-3 949 145**

(73) Proprietor: **KURARAY CO., LTD.**
**1621 Sakazu**
**Kurashiki-City Okayama Prefecture 710 (JP)**

(72) Inventor: **Genba, Tsuneo**
**256-13, Kanemoto**
**Okayama-City Okayama-Pref. (JP)**
Inventor: **Yoshinaka, Junichi**
**2-1-36-6, Kaigan-Dori**
**Okayama-City Okayama-Pref. (JP)**
Inventor: **Nakanishi, Shingo**
**2-6-24, Fukushima**
**Okayama-City Okayama-Pref. (JP)**
Inventor: **Maruo, Kazuo**
**2-18-9, Namiki-Cho**
**Okayama-City Okayama-Pref. (JP)**
Inventor: **Nakahara, Hisashi**
**3527-1, Shitori Mitsu-Cho**
**Mitsu-Gun Okayama-Pref. (JP)**

(74) Representative: **Vossius & Partner**
**Siebertstrasse 4 P.O. Box 86 07 67**
**D-8000 München 86 (DE)**

EP 0 206 304 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

The present invention relates to a covering sheet having an improved rain-shielding property and a high degree of air and moisture permeability and, more particularly, to a covering sheet suited for agricultural use.

It is well known that plants convert carbon dioxide and water into carbohydrate using solar light as an energy source and this process is known as photosynthesis. The production of pigments by the foliage, petals, seeds and fruits of plants are also dependent on light and there are certain optimum values of light quantity for this pigment production. Therefore, the amount of exposure to solar light is usually controlled by means of nets, films, or the like. On the other hand, as covering materials for green houses, tunnel houses, etc. (which will hereinafter be referred to briefly as the house or houses), films made of polymers such as polyester, polyvinyl chloride, polyethylene, ethylene-vinyl acetate copolymer, polyvinyl alcohol, etc. have been utilized for ensuring warmth retention during the cold season, i.e. in the winter months, early spring and late fall. However, since the internal temperature of the house may at times rise to near 30°C during the daytime, it has been necessary to roll up the skirt or side part of the covering sheet for ventilation and roll down the skirt of the sheet again in the evening. This work detracts from the crop productivity per man-hour to thereby cause an increase in the production cost of crop plants.

For preventing the above increase in the internal temperature of the house, it has been practiced to perforate the covering film or use a slit film partially fixed with an adhesive, a fabric woven or knitted from slit polyvinyl alcohol film with a covering rate of 30 to 90 percent, or a film-nonwoven fabric combination sheet such that the top of the house is made of the non-woven fabric while the skirt part of the house is made of the film, for instance. However, the covering sheet of perforated film has a low covering rate, i.e. the rate reduced by the amount corresponding to the perforation area, and suffers from the disadvantage that it permits direct entry of rain drops on rainy days. Though this construction offers the advantage of water supplementation, the direct dripping of water onto the plants in the house is undesirable for their growth. Regarding the slit film, since it has been physically pre-strained by slitting, this type of fabric tends to have a reduced strength and a decreased dimensional stability. The fabric woven from slit polyvinyl alcohol film with a covering rate of 30 to 90% for the purpose of ensuring an improved air permeability has the disadvantage that rain drops directly find their way into the house through the chinks. Another disadvantage of this type of covering material is that when the sheet is spread out over a large area, the slit film generally betrays a low tensile strength so that the sheet made of such material tends to break and, due to poor dimensional stability, undergoes local tears on aging (change in size of the film due to repeated cycles of moisture absorption and dehydration).

On the other hand, solar radiation penetrates into the house in the wavelength range of about 0.3 to 3.0 μm to warm the soil and plants in the house but the dissipation of heat during night hours occurs in the long-wavelength infrared radiation of 3 to 30 μm, centered around 9 to 11 μm. As far as the increase in the internal temperature of the house in the daytime is concerned, a covering material of perforated film or one woven from slit film with intervals or chinks reduces the necessity of ventilation and helps prevent high-temperature damage to crop plants, but as the infrared light emanating from the soil and plants in the house during the night hours is radiated out from the house through the perforations or chinks, it may result in low-temperature damages to the crop plants.

French Patent No. 2 071 064 discloses a woven fabric destined to protect and/or transport plants, characterized by its warp and weft texture, the warp comprising alternatively at least one and, in general, several flat threads which are flat-woven with the weft and are held between the threads connected with said weft by way of a weaving method which is known by the name of "tours anglaise".

It is the object of the present invention to provide a covering material which is air-permeable and, hence, does not require ventilation and, yet, which does not permit direct entry of rain drops on rainy days and dissipation of the infrared radiation emanating from the soil and plants during night hours.

Thus, the present invention relates to an air- and moisture permeable transparent covering sheet woven using tape-shaped yarn (which will hereinafter be referred to briefly as tape yarn) which covering sheet is charcterised by a covering rate of at least 95 percent, with the maximum clearance at the undulations of the tape yarn being less than 500 μm, and having an air permeability of 5 to 100 cm$^3$/cm$^2$·sec. and a moisture permeability of 1000 to 5000 g/m$^2$·24 hours.

The air- and moisture-permeable covering sheet according to the present invention will be described in detail with reference to the accompanying drawings.

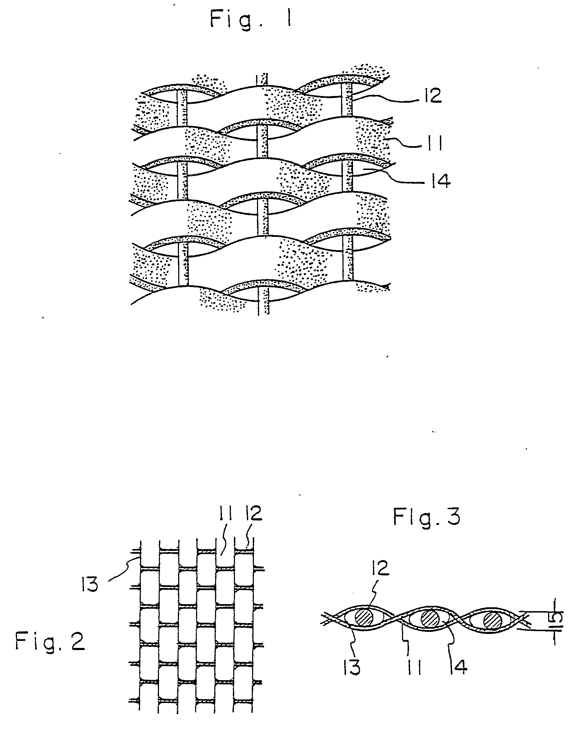

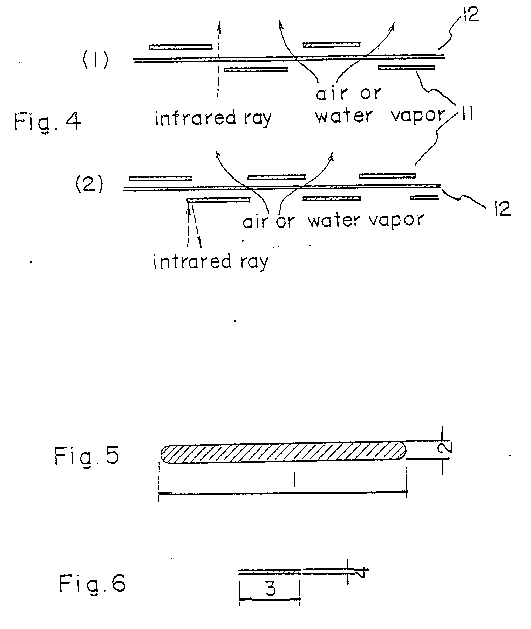

Fig. 1 is a view showing the air- and moisture-permeable covering sheet embodying the principle of the present invention; Fig. 2 is a plan view of the same air- and moisture-permeable covering sheet; and Fig. 3 is a cross-sectional view of the same covering sheet. In these views, the reference numeral 11 indicates a tape yarn, 12 a filling yarn, and 14 a clearance formed by the undulation of said tape yarn. While the construction illustrated in Figs. 1 through 3 is a plain-weave fabric made up of tape yarn as warp yarn and a yarn with a circular cross-section as filling yarn, it will be apparent from Fig. 2 that, in plan view, there is substantially no chink between arrays of tape yarn with a covering rate of at least 95% and preferably about 100%. However, as is apparent from Figs. 1 and 3, the tape yarn 11 is running above and below the filling yarn 12 in an undulating manner to form a clearance 14. Fig. 4 gives schematic cross-section views of two covering sheets as viewed from a direction parallel to the filling yarn, showing an air- and moisture-

2

permeable covering sheet woven from tape yarn as the warp and a yarn with a circular cross-section as the filling yarn with a covering rate of less than 95% [Fig. 4(1)] and a similar covering sheet woven with a covering rate of 95% or more [Fig. 4(2)]. It is clear from Fig. 4(1) that when a wide chink is formed between arrays of tape yarn, not only air and water vapor but also infrared rays pass through the chink but conversely where substantially no chink exits between arrays of tape yarn [construction of Fig. 4(2)], air and water vapor may pass through the clearance formed by the undulation of tape yarn but infrared rays are reflected by the tape yarn so that they cannot penetrate the covering sheet.

Fig. 5 is a cross-sectional view showing the orifice of the spinning nozzle used in the manufacture of the tape yarn which constitutes the air- and moisture-permeable covering sheet of the present invention. Fig. 6 is a cross-sectional view showing the tape yarn obtained by utilizing the same nozzle orifice configuration.

As mentioned above, the air- and moisture-permeable covering sheet according to the present invention is characterized in that, as viewed in plan view, it has substantially no chink between arrays of its constituent tape yarn to thereby provide a covering rate of at least 95%, preferably 100%, but as viewed in cross section, its tape yarn undulates as it threads above and below its filing yarn to provide a clearance, and as such, is characterized in that it not only ensures adequate air permeability but does not permit direct entry of rain drops and permits only a minimum of dissipation of heat during the night hours. The term "air permeability" as used herein means that when the air under the covering sheet is heated and begins to undergo convection, a portion of the warmed air flows out from the clearances in the covering sheet and, instead, cold air flows into the internal space from the skirt part of the house and is intermingled with the warm air and participate in the convection to thereby prevent the high-temperature hazard mentioned hereinbefore.

The humidity within the house must also be maintained within the proper range in order to avoid the high-humidity hazard on the one hand and avoid adverse influences on the growth of plants on the other hand and, yet, permit an efficient photosynthesis. As the material for house covering sheets, the film made of various polymers such as polyvinyl chloride, polyethylene, polyvinyl acetate, ethylene-vinyl acetate copolymer, etc. can be employed but the usual covering films made of these polymers are either insufficient in moisture permeability or in air permeability. In the present invention, tape yarn is used to weave a covering sheet in such a manner that the sheet not only has adequate air permeability but the water vapor in the house is allowed to escape through the clearances in the sheet to hold the relative humidity in the house at a suitable level. The polymer material for this tape yarn may be any of the materials commonly used for the manufacture of agricultural covering sheets. However, polyvinyl alcohol which is inherently moisture-permeable, particularly a polyvinyl alcohol having an average polymerization degree of at least 1000 and a saponification degree of at least 98 percent, is especially useful. Furthermore, as polyvinyl alcohol does not transmit infrared radiation in the wavelength range of 3 to 30 $\mu$m, it is a preferable material in terms of warmth retention during night hours. The tape yarn constituting the covering sheet according to the present invention is directly obtained by extruding a polymer dope from a nozzle with an orifice having a non-circular cross-section, as shown in Fig. 5, in the usual manner of dry or melt-spinning and, if necessary, subjecting the extrudate to stretching and heat treatment, and the tape yarn manufactured in this manner is by far superior in strength and dimensional stability to the slit yarn manufactured by slitting a wide film.

The first feature of the present invention is that owing to the construction of tape yarn woven into an air- and moisture-permeable fabric with a covering rte of at least 95 percent, a maximum clearance at the undulating formation of the tape yarn being less than 500 $\mu$m, and with an air permeability of 5 to 100 cm$^3$/cm$^2$·sec., preferably 10 to 50 cm$^3$/cm$^2$·sec. and a moisture-permeability of 1000 to 5000 g/m$^2$·24 hours, no ventilation is necessary.

The second feature of the present invention is that, as shown in Fig. 4(2), as the covering rate of not less than 95% is achieved while adequate air- and moisture-permeability is maintained, the direct dissipation of infrared radiation is minimized to improve the warmth-retaining property of the covering sheet. The third feature of the present invention is that the air permeability and moisture permeability of the covering sheet of the invention are sufficient to prevent the damage to crop plants under cultivation by excessive humidity. The fourth feature of the present invention is that when polyvinyl alcohol is used as a raw material for tape yarn, its hygroscopic property causes the yarn to swell due to water in rainfalls to narrow the chinks and thereby prevent entry of rain drops. In rainfalls, the wet tape yarn swells to make the covering rate close to 100 percent. If the initial covering rate (at 20°C, 65% R.H.) is less than 95 percent, the covering rate in rainfalls does not reach a value near 100%. On the other hand, on fine days, the water in the tape yarn is evaporated to narrow the tape width, with the result that the chinks are increased to make for more efficient ventilation. As a result, the adverse influence of water drips on the growth of crop plants and the high-temperature damage can be prevented. The fifth feature of the present invention is that while the diameter of rain drops in ordinary rainfalls is known to be about 500 $\mu$m and that of rain drops in foggy rainfalls is about 100 $\mu$m, the maximum clearance at the undulating formation of the tape yarn in the present invention (the clearance indicated at 15 in Fig. 3; thus, the width of the largest space formed by the difference in the phase of undulation of two adjacent arrays of tape yarn in the cross-section of the covering sheet) is less than 500 $\mu$m and preferably less than 350 $\mu$m, with the result that direct entry of rain drops that would adversely affect plant growth is prevented. The sixth feature of the present invention is that as the fabric of tape yarn according to the present invention has a high strength and good dimensional stability, the fabric can be used in such applications as spreading it over a large expanse of crop field for prevention of frost hazards.

In a preferred method for manufacturing the tape yarn, the material polymer dope is extruded from a spinneret nozzle having an orifice as illustrated in Fig. 5 and, then, stretched and heat-treated in the conventional method. In Fig. 5, the reference numeral 1 indicates the length of the slit nozzle and 2 the width of the same. The polymer materials that can be used in the manufacture of tape yarn for use according to the present invention include polyvinyl alcohol, polyethylene, polypropylene, polyester, polyamide, polyvinyl chloride, ethylene-vinyl acetate copolymer and so on. However, as mentioned hereinbefore, the most desirable material is polyvinyl alcohol which has a very low infrared transmittance in the long wavelength region, satisfactory warmth retentivity, and good moisture-permeability, clarity and weather resistance.

When a polyvinyl alcohol is used, an aqueous solution containing 30 to 60 weight percent of the polyvinyl alcohol is extruded through a spinneret nozzle having the above-mentioned orifice configuration, dried, stretched at a draft ratio of 2 to 7 and subjected to thermal shrinkage of 5 to 25 percent. To ensure the flexibility of tape yarn, a plasticizer such as glycerin may be added to polyvinyl alcohol. A substance that increases the hygroscopicity of product yarn, such as polyethylene glycol, may be added to the spinning dope composition. By using a nozzle of the type illustrated in Fig. 5, which has an effective length of 4 to 10 mm and an effective width of 0.06 to 0.1 mm, there can be obtained a tape yarn having a width (3 in Fig. 6) of 1.0 to 4.5 mm and a thickness (4 in Fig. 6) of 20 to 55 μm.

The width of tape yarn may be somewhere between 1.0 mm and 100 mm but when the tape yarn is used as the warp, the tape width preferred from the standpoint of weaving is 2.0 to 10.0 mm. A tape of narrow width tends to be reversed during weaving to make control of air permeability difficult or impossible and unless the density of filling is increased, the mesh-binding of the sheet becomes insufficient and the weaving cost increases. When the density of filling is decreased, a large amount of an adhesive is required for mesh-binding and, at the same time, because of the large amount of adhesive applied, the product sheet loses the flexibility necessary for agricultural use.

There is no specific upper limit to the width of tape yarn but the width is determined on the basis of required air permeability of the product sheet. When the expected air permeability of a sheet conditioned at 20°C and 65% R.H. for at least 48 hours is 5 to 20 $cm^3/cm^2 \cdot sec.$, a width of 6.0 to 10.0 mm is generally preferred. When the expected air permeability is 20 to 60 $cm^3/cm^2 \cdot sec.$, the preferred width is 3.0 to 6.0 mm, and when the air permeability is 60 to 100 $cm^3/cm^2 \cdot sec.$, a width of about 1.0 to 3.0 mm is generally preferred. However, as apparent from Fig. 3, this air permeability is not only dependent on the width of tape yarn but can be controlled by the density and diameter of filling yarn, the weaving construction, the material of filling yarn and other factors.

Regarding the thickness of tape yarn, the lower limit is 20 μm in view of weather resistance and processability of manufacturing and the upper limit is 1.0 mm in view of transparency, ease of handling (weight) and ease of weaving.

While the covering sheet according to the present invention is manufactured using the above-described tape yarn, it can be manufactured by the conventional weaving technique if one uses a tape yarn having a suitable width and weaves it at a suitable density in view of the required air permeability. For example, one may warp the tape yarn without chinks and weaves it with a monofilament or a resin-coated ring spun yarn, open end yarn or fasciated yarn (a yarn consisting of a substantially untwisted fiber bundle as a core and a winding of fiber around the core) as filling. The resulting woven fabric can be used, as it is, as an agricultural covering sheet. For improved dimensional stability, prevention of thread slippage and other purposes, the fabric may be sprayed or otherwise coated with a polymer having an affinity for the polymer of which the tape yarn or the filling yarn is made, preferably with a polymer of the same type as the yarns. In Figs. 2 and 3 which show the plain-weave sheet made of tape yarn and filling yarn, the reference numeral 13 indicates the web-like formation of cured adhesive (polymer) as formed upon drying of a polymer applied for preventing said slippage between the tape yarn 11 and monofilament 12.

The filling yarn constituting the agricultural covering sheet according to the present invention is preferably one having a diameter of about 100 to 300 μm. Of course, the cross-sectional shape of the filling yarn need not be circular. The density of filling is preferably in the range of 5 to 15 per inch (2,54 cm). As regards the construction of weave, plain weave is the most advantageous from the standpoint of preventing thread slippage.

As mentioned hereinbefore, the agricultural covering sheet according to the present invention is used for the purpose of allowing solar radiation to pass through it to increase the temperature in the house and, therefore, must be transparent to light. Specifically, the sheet preferably has a total transmittance of at least 80 percent. This total transmittance is measured in accordance with Japanese Industrial Standard K—6714. Thus, using a self-recording spectrophotometer [for example, Self-recording Spectrophotometer Model UV—365 manufactured by Shimadzu Seisakusho], the transmittance values in the range of 500 to 700 nm are read and the mean is calculated.

As mentioned hereinbefore, the agricultural covering sheet according to the present invention can be used as a house covering material or a covering material to be spread over a large area. Recently, for ensuring a complete retention of warmth for crop plants in the house, it has become common practice to provide a house or tunnel within a house and cultivate crop plants within the inner house or tunnel, and the

covering sheet according to the present invention can be used as a member of such inner house or tunnel.

The air permeability, moisture permeability and covering rate in the context of this specification are measured by the following methods.

Air permeability: the Frazier method according to JIS L—1096

Moisture permeability: the cup method according to JIS Z—0208

Covering rate: The chinks of the fabric are copied on a graphic paper using a universal projector and the area $a$ of the chinks is calculated. Using this area $a$ and the total area $A$ of the fabric, the covering rate is calculated by means of the following equation.

$$\text{Covering rate} = \left(\frac{A-a}{A}\right) \times 100 \ (\%)$$

The wet shrinkage of the tape yarn is measured by following method.

Wet shrinkage: The tape yarn is immersed in water at 20°C under loading condition of 0.002 g/dr, then the water is heated at the rate of 2°C/min. When the temperature of the water reaches 70°C, the rate of shrinkage with respect to the initial length is measured.

The dimensional stability and wet strength values mentioned in the example that follows were measured by the following method.

Dimensional stability: A sheet sample 25 cm by 25 cm (warp direction × filling direction) is marked at 20 cm intervals in the warp and filling directions, immersed in water at 20°C for 16 hours, and after air drying, the rate of shrinkage with respect to the initial dimension is calculated.

Wet strength: Samples, 5 cm wide by about 30 cm long, are cut out in warp and filling directions, respectively, and after immersion of each sample in water at 20°C for 16 hours, the tensile strength at break is measured using a constant-speed tensile testing machine at a grip length of 20 cm and a pulling speed of 10 cm/min. The value is regarded as the wet strength of the sample.

Example 1

An aqueous solution containing 48% of polyvinyl alcohol (average degree of polymerization: 1740; degree of saponification: 99.9%) was extruded from a slit nozzle orifice with an effective length of 10.0 mm and an effective width of 0.1 mm by the usual dry spinning method. The resulting tape had a thickness of 92 μm, a width of 8.5 mm, a weight of 5700 dr and a moisture content of 1.5%. This tape was treated under the following conditions.

Draft ratio × stretching temperature: 4.5 times × 230°C

Shrinking rate × shrinking temperature: 20% × 240°C

The resulting tape yarn had a weight of 1580 dr, a conditioned tensile strength of 5.2 g/d, a conditioned dry tensile elongation of 13.0%, a shrinkage rate in water at 70°C of 2.5%, a thickness of 43 μm and a width of 3.4 mm. The weavability of the tape was also satisfactory. Using this tape yarn as warp yarn and a polyvinyl alcohol monofilament with a diameter of 160 microns and a weight of 250 dr/l f as filling yarn at a density of 10 monofilaments per inch (2.54 cm), a woven fabric was manufactured (Covering sheet A). Similarly, a polyvinyl chloride tape yarn with a thickness of 100 μm and a polyethylene tape yarn with a thickness of 75 μm were also used to manufacture covering sheets (Covering sheets B and C). The results of using these Covering sheets A, B and C for the tunnel cultivation of a winter vegetable (lettuce) are shown. As controls, a polyvinyl alcohol film with a thickness of 75 μm (Covering sheet D) and a polyvinyl chloride film with a thickness of 100 μm (Covering sheet E) were used. The results for these control sheets are also shown. As additional controls, Covering sheets F and G were manufactured by weaving the same yarn and monofilament as used in Covering sheet A with spacings between arrays of tape yarn to give covering rates of 71% and 88%, respectively. The results for these control sheets F and G are also shown in the Table.

In the above examples, covering sheets A, E and F were coated with PVA solution and then cured at 180°C, keeping their widths.

| | Tunnel House Covering Sheets | | | | | | |
|---|---|---|---|---|---|---|---|
| | Examples | | | Control Examples | | | |
| | A | B | C | F | G | D | E |
| Air permeability <cm³/cm²·sec> 20°C × 65% RH | 50 | 40 | 55 | 310 | 105 | 0 | 0 |
| Moisture permeability <g/m²·24 hrs> 40°C × 90% RH | 4200 | 2700 | 2800 | 7500 | 5800 | 950 | 160 |
| Covering rate <%> 20°C × 65% RH | 96 | 97 | 96 | 71 | 88 | 100 | 100 |
| Maximum clearance at undulating formation (μm) | 180 | 180 | 180 | 180 | 180 | — | — |
| Total light transmittance (%) | 89 | 90 | 90 | 91 | 90 | 92 | 91 |
| Ventilation work | Not performed | Not performed | Not Performed | Not Performed | Not Performed | Performed daily on fine days | Performed daily on fine days |
| Incidence of high temperature damage | None | None | None | None | None | None | None |
| Warmth retention during night hours | o ∿ Δ | o ∿ Δ | × | × | Δ ∿ × | o | o |
| Humidity within house | o | o ∿ Δ | o ∿ Δ | (Δ ∿ × Too dry) | (Δ Slightly too dry) | (Δ Too humid) | (Δ ∿ × Too humid) |
| Production yield of lettuce <g/head> n = 50 each | $\bar{x}$ 480 min 220 max 590 | $\bar{x}$ 420 min 131 max 510 | $\bar{x}$ 340 min 105 max 488 | $\bar{x}$ 304 min 68 max 500 | $\bar{x}$ 300 min 95 max 505 | $\bar{x}$ 342 min 100 max 490 | $\bar{x}$ 338 min 110 max 460 |
| Dimensional stability (warp % × filling %) | 3.5 x 1.2 | 0.0 x 1.5 | 0.0 x 1.5 | 3.0 x 1.4 | 3.0 x 1.5 | 5.0 x 4.5 | 0.0 x 0.0 |
| Wet strength (kg·warp x filling) | 55 x 16 | 10 x 17 | 7 x 16 | 46 x 17 | 50 x 15 | 20 x 21 | 12 x 11 |

o: excellent  Δ: medium  x: bad  $\bar{x}$: mean value

**Claims**

1. An air- and moisture-permeable transparent covering sheet comprising a woven fabric made of tape yarn (11), characterised by a covering rate of at least 95 percent, the maximum clearance (14) at the undulations of said tape yarn (11) being less than 500 µm, and said fabric having an air permeability of 5 to 100 cm$^3$/cm$^2$·sec. and a moisture permeability of 1000 to 5000 g/m$^2$·24 hours.

2. A covering sheet according to Claim 1 wherein said tape yarn (11) has a wet shrinkage of not more than 3 percent in the water at 70°C, a conditioned tensile strength of 1.0 to 7.0 g/dr, and a dry tensile elongation of 10 to 25 percent.

3. A covering sheet according to Claim 1 wherein said tape yarn (11) has a thickness of 20 to 1000 µm.

4. A covering sheet according to Claim 1 wherein said tape yarn (11) has a width of 1.0 to 100.0 mm, said tape yarn being interwoven substantially without chinks with a filling yarn (12) which may be a monofilament, a spun yarn, and open end yarn or a fasciated yarn.

5. A covering sheet according to Claim 1 wherein said tape yarn (11) comprises a polyvinyl alcohol having an average degree of polymerization not less than 1000 and a degree of saponification not less than 98 percent.

6. Use of the covering sheets according to any of claims 1 to 5, as agricultural covering sheets.

**Patentansprüche**

1. Eine luft- und feuchtigkeitsdurchlässige durchsichtige Abdeckung, umfassend ein Gewebe aus einem bandförmigen Garn (11), gekennzeichnet durch einen Abdeckanteil von mindestens 95%, durch den maximalen Spielraum (14) an der Wellung des bandförmigen Garns von weniger als 500 µm, durch eine Luftdurchlässigkeit von 5 bis 100 cm$^3$/cm$^2$·sec. und eine Feuchtigkeitsdurchlässigkeit von 1000 bis 5000 g/m$^2$·24h.

2. Eine Abdeckung nach Anspruch 1, in der das bandförmige Garn (11) ein Naßschrumpfen in Wasser von 70°C, von nicht mehr als 3 Prozent, eine konditionierte Zugfestigkeit von 1,0 bis 7,0 g/dr und eine Trockenzugdehnung von 10 bis 25% aufweist.

3. Eine Abdeckung nach Anspruch 1, in der das bandförmige Garn (11) ein Dicke von 20 bis 1000 µm aufweist.

4. Eine Abdeckung nach Anspruch 1, in der das bandförmige Garn (11) eine Breite von 1,0 bis 100,0 mm aufweist und mit einem Füllgarn (12), das ein Monofilgarn, ein gesponnenes Garn, ein Offen-End-Garn oder ein Garnbündel sein kann, im wesentlichen ohne Ritzen verwebt ist.

5. Eine Abdeckung nach Anspruch 1, in der das bandförmige Garn (11) einen Polyvinylalkohol mit einem mittleren Polymerisationsgrad von mindestens 1000 und einem Verseifungsgrad von mindestens 98% umfaßt.

6. Verwendung der Abdeckung nach einem der Ansprüche 1 bis 5 als Abdeckung für landwirtschaftliche Zwecke.

**Revendications**

1. Une feuille de recouvrement transparente perméable à l'air et à l'humidité, comprenant un tissu fait d'un fil-ruban (11), caractérisée par un taux de recouvrement d'au moins 95%, l'espace libre maximal (14) aux ondulations dudit fil-ruban (11) étant inférieur à 500 µm et ledit tissu ayant une perméabilité à l'air de 5 à 100 cm$^3$/cm$^2$·s et une perméabilité à l'humidité de 1000 à 5000 g/m$^2$·24 h.

2. Une feuille de recouvrement selon la revendication 1, dans laquelle ledit fil-ruban (11) a un retrait au mouillé ne dépassant pas 3% dans l'eau à 70°C, une résistance à la traction après conditionnement de 1,0 à 7,0 g/dr et un allongement à la traction à sec de 10 à 25%.

3. Une feuille de recouvrement selon la revendication 1, dans laquelle ledit fil-ruban (11) a une épaisseur de 20 à 1000 µm.

4. Une feuille de recouvrement selon la revendication 1, dans laquelle ledit fil-ruban (11) a une largeur de 1,0 à 100,0 mm, ledit ruban étant entrelacé, essentiellement sans fentes, avec un fil de trame (12) qui peut e☆re un monofilament, un filé, une fibre libérée ou un fil fascié.

5. Une feuille de recouvrement selon la revendication 1, dans laquelle ledit fil-ruban (11) comprend un alcool polyvinylique ayant un degré moyen de polymérisation d'au moins 1000 et un degré de saponification d'au moins 98%.

6. Utilisation des feuilles de recouvrement selon l'une quelconque des revendications 1 à 5 comme feuilles de recouvrement agricoles.

Fig. 1

Fig. 2

Fig. 3

(1)

Fig. 4

infrared ray

air or
water vapor

12

11

(2)

air or water vapor

12

intrared ray

Fig. 5

1

2

Fig. 6

3

4